# FASCICULE DE BREVET EUROPEEN

(11) **EP 1 470 712 B1**
(45) Date de publication et mention de la délivrance du brevet: **11.07.2012**
(21) Numéro de dépôt: 03743908.0
(22) Date de dépôt: 21.01.2003
(51) Int. Cl.: H04N 21/6543, H04N 21/266

(54) **Procédé de commande à distance d'une action locale de génération d'un message d'ordre**
Fernsteuerverfahren für eine lokale Aktion zur Erzeugung einer Befehlsnachricht
Remote control method for a local action to generate a command message

(30) Priorité: 28.01.2002 FR 0200990
(43) Date de publication de la demande: 27.10.2004
(73) Titulaire: Viaccess, 92057 Paris La Defense (FR)
(72) Inventeur: VIGARIE, Jean-Pierre, F-35510 CESSON SEVIGNE (FR); BECKER, Claudia, F-35000 RENNES (FR); CODET, André, F-35200 RENNES (FR); FEVRIER, Pierre, F-35250 ST SULPICE LA FORET (FR); GUIONNET, Chantal, F-35510 CESSON SEVIGNE (FR)
(74) Mandataire: Fréchède, Michel
(86) Numéro de dépôt international: PCT/FR2003/000193
(87) Numéro de publication internationale: WO 2003/077555

(56) Documents cités:
- WO-A-00/56068
- WO-A-01/50755
- US-A- 5 291 554

## Description

La présente invention concerne un protocole de commande à distance d'une action locale de génération d'un message d'ordre et des dispositifs d'enregistrement et de retransmission mettant en oeuvre un tel protocole.

De telles techniques de commande sont utilisées notamment dans la transmission d'informations en réseau. Elles permettent à un émetteur de commander la génération locale d'un message d'ordre qui sera exécuté ultérieurement. Typiquement, un tel message d'ordre est généré en utilisant des paramètres locaux du récepteur.

De telles techniques sont utilisées dans le domaine de la diffusion de programmes de télévision à accès conditionnel, sous les termes de « trans-contrôle » ainsi que cela est décrit dans les brevets français FR-A-90 07 165 et FR-A-96 10 302.

Les techniques décrites dans ces documents permettent à un récepteur habilité de remplacer un message de service associé à des informations embrouillées par un nouveau message calculé localement. Ceci permet notamment d'effectuer un nouveau chiffrement de mots de contrôle après les avoir déchiffrés, et en utilisant des paramètres locaux.

Cependant, ces techniques posent des problèmes importants de sécurité d'utilisation.

En effet, l'émetteur initial ne dispose que d'un contrôle limité sur l'utilisation des mots de contrôle reçus permettant de gérer les informations au niveau du récepteur.

De ce fait, dans le cas d'un enregistrement ou d'une retransmission des informations, l'émetteur initial ou émetteur diffuseur ne maîtrise pas l'utilisation faite des informations associées au message d'ordre calculé localement.

De la même manière, dans le cadre d'une transmission par l'intermédiaire de satellites vers des stations de retransmission, chaque station doit comporter des moyens d'accès et de transformation de l'ensemble des informations transmises.

Par exemple, il s'agit de processeurs de sécurité intégrés chacun dans une carte contenant des codes de haut niveau d'habilitation.

Cependant, de par leur multiplicité, il est difficile d'assurer la sécurité physique de ces équipements dans les stations de retransmission.

Il apparaît donc que les équipements existants présentent des problèmes spécifiques de sécurité d'utilisation.

Le but de l'invention est de résoudre ces problèmes de sécurité d'utilisation en permettant à un émetteur de contrôler partiellement ou même totalement, l'utilisation faite par un récepteur d'informations reçues.

La présente invention a pour objet un protocole de commande à distance d'une action de génération locale d'un message d'ordre, à partir d'un émetteur diffuseur, afin de commander une action locale sur au moins un poste récepteur, comportant au moins un terminal de décodage, un module de contrôle d'accès muni d'un processeur de sécurité, ledit processeur de sécurité comportant des paramètres de vérification d'authenticité et d'adresse mémorisés dans une mémoire associée audit processeur, ledit protocole comportant :
- une étape de transmission de l'émetteur diffuseur vers le ou les postes récepteurs, d'un message d'habilitation comportant un champ contenant des paramètres d'authenticité et d'adresse et un champ contenant des données ; et
- une étape de vérification dans le ou lesdits postes récepteurs desdits paramètres d'authenticité et d'adresse par rapport aux paramètres mémorisés dans chacun desdits postes récepteurs ;
   caractérisé en ce que ledit message d'habilitation comporte, dans le champ de données, une action de génération, au niveau du ou des postes récepteurs, d'un message d'ordre calculé localement, et en ce que ledit protocole comporte au moins, conditionnellement à ladite étape de vérification :
- une étape d'interprétation de ladite action transmise dans ledit message d'habilitation ; et
- une étape de génération locale d'un message d'ordre en réponse à ladite étape d'interprétation.

Suivant d'autres caractéristiques de l'invention :
- ledit champ de données du message d'habilitation comporte une pluralité de blocs d'instructions agencés en combinaisons logiques de conditions dont le résultat binaire de la vérification logique, vrai ou faux, permet d'engendrer un branchement conditionnel entre les blocs et le traitement des instructions contenues dans lesdits blocs ;
- ladite action comporte un champ contenant des paramètres représentatifs du format dudit message d'ordre à générer localement, ladite étape d'interprétation de l'action comportant au moins une étape de prise en compte desdits paramètres de format afin d'exécuter des opérations pour générer des éléments du message d'ordre conformément à ces paramètres de format ;
- lesdites opérations réalisées lors de ladite étape d'interprétation incluent des opérations de chiffrement, de déchiffrement et/ou de surchiffrement ;
- lesdits paramètres de format contenus dans l'action comprennent des références à des paramètres locaux, mémorisés dans une mémoire non accessible en écriture pour les utilisateurs desdits terminaux, lesdits paramètres locaux étant utilisés lors desdites opérations de ladite étape d'interprétation de l'action ;
- lesdits paramètres de format contenus dans l'action comprennent des références à des paramètres locaux, mémorisés dans une mémoire accessible en écriture pour les utilisateurs desdits terminaux, lesdits paramètres locaux étant utilisés lors desdites opérations de ladite étape d'interprétation de l'action ;
- ladite action comporte un champ contenant des paramètre d'habilitation, ladite étape d'interprétation de l'action comportant au moins une étape de génération de paramètres de sécurité afin de définir des paramètres de sécurité pour le message d'ordre, au moins à partir desdits paramètres d'habilitation et en fonction des opérations requises par la réalisation de l'étape de prise en compte des paramètres de format ;
- ladite action comporte un champ contenant des données, ladite étape d'interprétation de l'action comportant au moins une étape de traitement de données afin de définir des données du message d'ordre, au moins à partir desdites données contenues dans le champ de données de l'action et en fonction des opérations requises par la réalisation de l'étape de prise en compte des paramètres de format ;
- ledit champ de données de l'action comporte une pluralité de blocs d'instructions agencés en combinaisons logiques de conditions dont le résultat binaire de la vérification logique, vrai ou faux, permet d'engendrer un branchement conditionnel entre les blocs et le traitement des instructions qu'ils contiennent ;
- ladite étape de génération délivre un message d'ordre comportant un champ contenant des paramètres de sécurité et un champ contenant des données ;
- ledit champ de données du message d'ordre comporte une pluralité de blocs d'instructions agencés en combinaisons logiques de conditions dont le résultat binaire de la vérification logique, vrai ou faux, permet d'engendrer un branchement conditionnel entre les blocs et le traitement des instructions qu'ils contiennent ;
- ledit protocole comporte ultérieurement à ladite étape de génération locale d'un message d'ordre, une étape d'exécution de ce message d'ordre ;
- ladite étape d'exécution du message d'ordre comprend la vérification de paramètres de sécurité contenus dans le message d'ordre et la lecture pour le traitement de données contenues dans le message d'ordre ;
- ledit message d'ordre généré localement est un message d'habilitation tel que défini précédemment ;
- ledit émetteur diffuseur étant adapté pour l'émission d'informations embrouillées au moyen d'une clé de service contenue dans un mot de contrôle, la transmission desdites informations embrouillées étant accompagnée de la transmission d'un cryptogramme du mot de contrôle, chiffré au moyen d'une clé d'exploitation, le terminal de décodage de chaque poste récepteur constituant alors un terminal de désembrouillage desdites informations embrouillées et comportant dans ledit processeur de sécurité dudit module de contrôle, ladite clé d'exploitation afin de restituer à partir de ladite clé d'exploitation et dudit mot de contrôle chiffré, ladite clé de service contenue dans ledit mot de contrôle, chaque terminal de désembrouillage permettant à partir de ladite clé de service restituée, le désembrouillage desdites informations embrouillées, ledit message d'habilitation est transmis par multiplexage dans le flux desdites informations embrouillées transmises de l'émetteur diffuseur vers le ou les postes récepteurs ;
- ledit champ de données de ladite action comporte au moins ledit cryptogramme du mot de contrôle ;
- ledit champ de données de ladite action comprend des instructions de remplacement du message d'habilitation multiplexé avec lesdites informations embrouillées par ledit message d'ordre généré localement et ladite étape de génération locale d'un message d'ordre est suivie d'une étape de remplacement dudit message d'habilitation par ledit message d'ordre dans lesdites informations embrouillées ;
- il comporte une étape d'enregistrement sur un support non volatil desdites informations embrouillées et multiplexées avec ledit message d'ordre généré localement ;
- lesdits paramètres de sécurité et/ou lesdites données dudit message d'ordre comportent des critères d'accès auxdites informations embrouillées enregistrées sur ledit support non volatil, ledit protocole comportant en outre :
- une étape de requête d'accès auxdites informations embrouillées et enregistrées ; et
- une étape de vérification desdits critères d'accès du message d'ordre afin de délivrer, sur vérification de ces critères d'accès, une autorisation d'accès auxdites données embrouillées enregistrées ;
- lesdits critères d'accès sont choisis parmi les paramètres dans le groupe constitué des paramètres suivants :
- un niveau d'habilitation du terminal ;
- une date limite d'autorisation d'accès ;
- une durée définie par rapport à une date et/ou un instant ;
- une durée de vie ; et
- un nombre maximum de requêtes d'accès autorisées ;
- il comporte une étape de retransmission desdites informations embrouillées multiplexées avec ledit message d'ordre généré localement, à partir du ou desdits postes récepteurs vers un ou plusieurs postes récepteurs secondaires ; et
- tout ou partie dudit message d'habilitation est chiffré avant ladite étape de transmission afin d'assurer la confidentialité de cette transmission, ladite étape de vérification des paramètres d'authenticité et d'adresse étant associée à une étape de déchiffrement de ce message d'habilitation.

L'invention a également pour objet un terminal de décodage et d'enregistrement comportant un décodeur associé à un processeur de sécurité intégré, par exemple, dans une carte amovible comportant un microprocesseur et une mémoire non accessible en écriture pour un utilisateur, ledit terminal comportant en outre un support non volatil d'enregistrement d'informations, caractérisé en ce qu'il est adapté pour la mise en oeuvre d'un protocole tel que décrit précédemment.

L'invention a en outre pour objet un terminal de décodage et de re-transmission comportant un décodeur associé à un processeur de sécurité ou à une telle carte amovible comportant un microprocesseur et une mémoire non accessible en écriture pour un utilisateur, ledit terminal comportant en outre des moyens de retransmission d'informations, caractérisé en ce qu'il est adapté pour la mise en oeuvre d'un protocole tel que décrit précédemment.

L'invention sera mieux comprise à la lecture de la description qui va suivre, donnée uniquement à titre d'exemple et faite en se référant aux dessins annexés, sur lesquels :
- la Fig.1 est un organigramme de principe du protocole de l'invention ;
- les Figs.2, 3 et 4 sont des schémas représentatifs du format des messages utilisés dans le protocole de l'invention ;
- la Fig.5 est un schéma de principe de la transmission classique d'une information embrouillée ;
- la Fig.6 est un schéma de principe de la réception et du traitement selon l'invention d'une information embrouillée ;
- la Fig.7 est un synoptique d'un système d'enregistrement mettant en oeuvre l'invention ; et
- la Fig.8 est un synoptique d'un système de retransmission mettant en oeuvre l'invention.

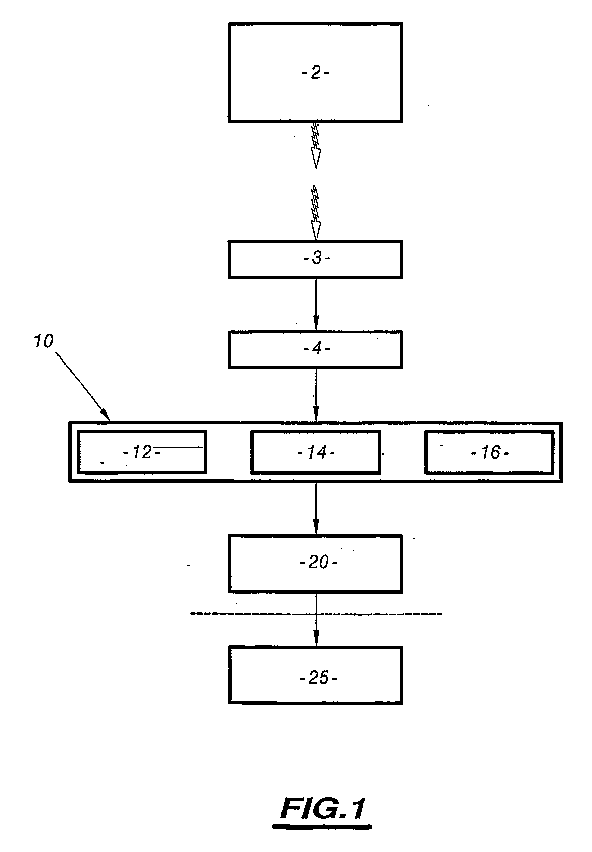

Sur la figure 1, on a représenté un organigramme des étapes principales du protocole de commande à distance d'une action locale de génération d'un message d'ordre selon l'invention.

Le protocole débute par une étape 2 de transmission à partir d'un émetteur diffuseur vers un ou plusieurs postes récepteurs, d'un message d'habilitation désigné par la référence HM.

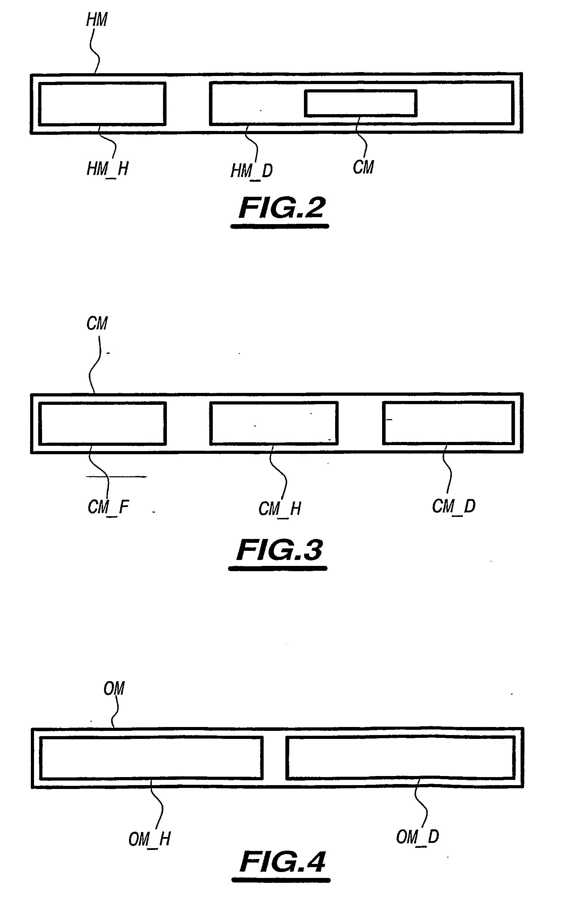

Ce message d'habilitation HM comporte ainsi que cela est représenté en référence à la figure 2, un champ HM_H contenant des paramètres d'authenticité et d'adressage et un champ de données HM_D.

Selon l'invention, le champ de données HM_D comporte en outre un champ contenant une action CM de génération, au niveau du ou des postes récepteurs, d'un message d'ordre désigné par la référence OM.

En référence à la figure 1, il apparaît que suite à l'étape 2 de transmission, le protocole comporte une étape 3 de réception puis une étape 4 de vérification de l'authenticité et de l'adresse des destinataires du message d'habilitation HM.

Cette étape 4 est réalisée de manière classique et permet de vérifier que le message transmis n'a pas été altéré et que le ou les postes récepteurs sont bien destinataires de ce message et habilités à le traiter.

Dans le cas où les paramètres d'authenticité et d'adressage sont vérifiés, le ou les postes récepteurs lisent puis traitent le champ de données HM_D.

De manière classique, le champ de données HM_D peut être organisé en une pluralité de blocs agencés en combinaisons logiques de conditions dont le résultat binaire de la vérification logique, vrai ou faux, permet d'engendrer des branchements fonctionnels entre les blocs.

Chaque bloc peut comporter des actions ou listes d'actions à exécuter.

Typiquement, le champ HM_D peut être agencé selon une phrase logique structurée contenant la relation logique suivante :
si (If) : l'expression logique de condition est vérifiée ;
alors (THEN) : on exécute l'action ou la liste d'actions décrite dans le bloc de cette situation ou de la liste d'actions associée à la condition vérifiée ; et
sinon (ELSE) : on exécute l'action ou la liste d'actions décrite dans le bloc descriptif de l'action ou de la liste d'actions associée à cette condition non vérifiée.

Le champ de données HM_D contient au moins et éventuellement uniquement l'action CM de génération au niveau du ou de postes récepteurs du message d'ordre OM.

En référence à la figure 3, on a décrit le détail du format de l'action CM de génération d'un message d'ordre. CM contient un champ CM_H contenant des paramètres d'habilitation, un champ CM_F contenant des paramètres de format et un champ CM_D contenant des données.

Lors d'une étape 10 d'interprétation, l'action CM est interprétée de manière à générer tous les éléments nécessaires pour la génération locale du message d'ordre OM.

Dans ce but, l'étape 10 d'interprétation de l'action CM peut comporter une étape 12 de prise en compte des paramètres de format du champ CM_F afin de définir le format du message d'ordre OM et de définir ainsi les opérations à effectuer pour sa génération.

L'étape 10 d'interprétation peut en outre comprendre une étape 14 de génération de paramètres de sécurité afin de définir des paramètres de sécurité pour le message d'ordre OM, au moins à partir des paramètres d'habilitation contenus dans le champ CM_H de l'action CM et en fonction des opérations requises par,l'application des paramètres de format du champ CM_F.

L'étape 10 d'interprétation peut enfin comprendre également une étape 16 de traitement des données du champ CM_D afin de définir des données du message d'ordre OM, au moins à partir des données contenues dans le champ CM_D de l'action CM et en fonction des opérations requises par l'application des paramètres de format du champ CM_F.

L'ensemble des éléments définis lors de l'étape 10 d'interprétation de l'action CM est ensuite utilisé pour réaliser l'étape 20 de génération locale du message d'ordre OM.

En référence à la figure 4, on a représenté le détail du message d'ordre OM tel que généré à l'issue de l'étape 20.

Ce message OM comprend un champ OM_H contenant les paramètres de sécurité définis lors de l'étape 14 et un champ OM_D contenant les données définies lors de l'étape 16.

Immédiatement ou ultérieurement, le message d'ordre OM est exécuté lors d'une étape 25 d'exécution au cours de laquelle les paramètres de sécurité du champ OM_H sont vérifiés et le champ de données OM_D est lu puis traité.

Ainsi, le message d'ordre OM généré localement au niveau du ou des récepteurs constitue un message d'ordre destiné à une utilisation immédiate ou ultérieure et dont tout ou partie de la nature a été définie par l'émetteur du message d'habilitation HM.

En effet, du fait de l'étape 12, le message OM répond au format spécifié dans le champ CM_F de l'action CM.

De même, les paramètres de sécurité et les données du message d'ordre OM sont définis par l'exécution d'opérations induites par les paramètres de format spécifiés dans le champ CM_F, à partir au moins des paramètres d'habilitation définis dans le champ CM_H et des données contenues dans le champ CM_D de l'action CM.

Il apparaît donc que l'émetteur diffuseur, en définissant l'action CM contenue dans le message d'habilitation HM, définit l'ensemble des éléments utilisés lors de l'étape 20 de génération d'un message local et conserve ainsi la maîtrise de la génération du message d'ordre OM.

Avantageusement, à l'instar du champ de données HM_D, le champ de données CM_D de l'action CM contient des instructions ou des listes d'instructions, elles-mêmes agencées en combinaisons logiques selon des phrases logiques structurées.

A l'issue de l'étape 20 de génération, le message d'ordre OM contient, dans le champ OM_D, tout ou partie des données du champ CM_D, de sorte que le message d'ordre OM contient également des instructions ou liste d'instructions agencées en combinaisons logiques lesquelles seront exécutées lors de l'étape 25 d'exécution du message d'ordre OM.

Eventuellement, le message d'ordre OM généré à l'issue de l'étape 20, constitue un message d'habilitation du type du message HM décrit précédemment et son exécution lors de l'étape 25 aboutit à la génération d'un second message d'ordre.

On va maintenant décrire plus en détail le fonctionnement du protocole de l'invention, en faisant référence à la transmission d'informations embrouillées de télévision.

De manière classique dans la transmission d'informations de télévision, il existe des messages dits EXM qui sont des messages génériques de commande et/ou de réponse pouvant être déclinés en messages spécifiques tels que des messages dits ECM de contrôle d'accès, ou des messages dits EMM de gestion de titres d'accès, ou encore en tout autre message de gestion spécifique, ainsi que cela est décrit dans les brevets précédemment cités.

Dans le cadre de l'application de l'invention à la transmission d'informations embrouillées de télévision, un message d'habilitation HM tel que défini précédemment peut avoir une double fonction et être simultanément un message d'habilitation et un message de type EXM.

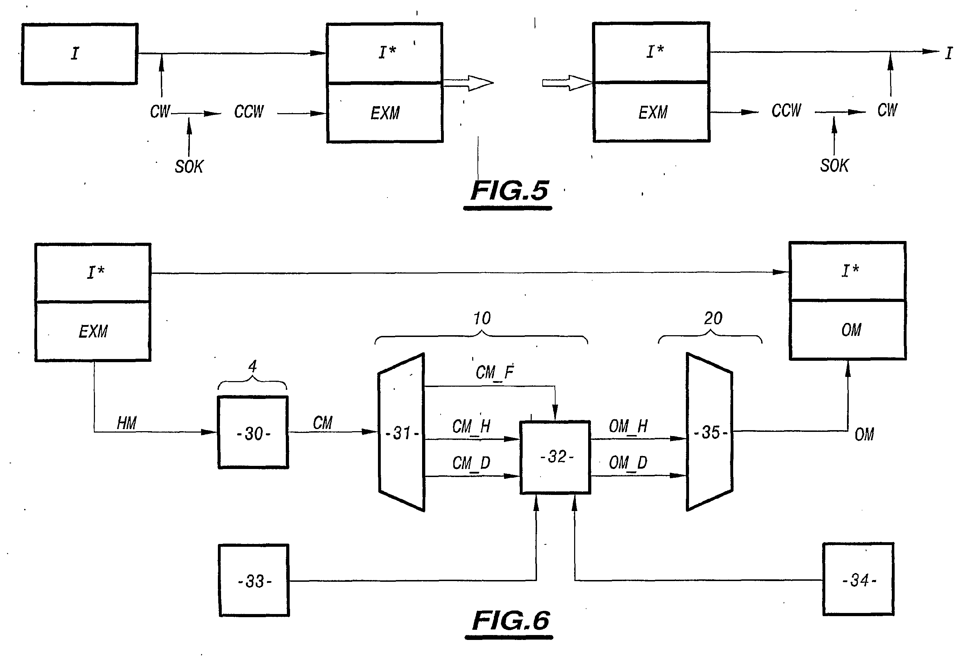

En référence à la figure 5, on décrit de manière plus détaillée le principe de base de l'émission d'une information embrouillée.

L'information I est embrouillée au moyen d'une clé de service contenue dans un mot de contrôle CW afin de délivrer une information embrouillée I*.

Le mot de contrôle CW est chiffré au moyen d'une clé de service SOK afin de délivrer un cryptogramme CCW du mot de contrôle.

Le cryptogramme CCW est inséré dans un message de type EXM qui est multiplexé avec l'information embrouillée I* dans le flux d'informations.

A la réception, l'information I* et le message de service EXM sont dé-multiplexés afin d'extraire le message EXM contenant le cryptogramme CCW du mot de contrôle.

A l'aide de la clé d'exploitation SOK, stockée au niveau du poste récepteur, le cryptogramme CCW du mot de contrôle est déchiffré afin d'obtenir le mot de contrôle CW contenant la clé de service qui permet de désembrouiller les informations I* et de restituer les informations I.

Sur la figure 6, on a représenté l'application du protocole de l'invention à la réception d'informations embrouillées.

Sur cette figure, on a représenté schématiquement les éléments d'un poste récepteur intervenant lors de la réception d'un message d'habilitation.

Ce poste récepteur comprend un module 30 de vérification des paramètres d'authenticité et d'adressage relié à un démultiplexeur 31 lui-même relié à un module de calcul 32. Le module 32 est également relié à une mémoire 33 non accessible en écriture pour un utilisateur du poste récepteur et à une mémoire 34 accessible en écriture pour un tel utilisateur.

La sortie du module de calcul 32 est reliée à un multiplexeur 35 qui délivre le message d'ordre OM.

A la réception, les informations embrouillées I* sont démultiplexées et le message d'habilitation HM est séparé.

Après la réception, le poste récepteur met en oeuvre l'étape 4 de vérification des paramètres d'authenticité et d'adressage grâce au module 30 de vérification de type classique

A la sortie du module 30, l'action CM est extraite du champ de données HM_D et est introduite dans le démultiplexeur 31 qui délivre en sortie les paramètres d'habilitation contenus dans le champ CM_H, les données contenues dans le champ CM_D et les paramètres de format contenus dans le champ CM_F, à l'attention du module de calcul 32 qui réalise l'étape 10 d'interprétation de l'action CM.

En fonction des paramètres de format CM_F, le module de calcul 32 effectue différentes opérations sur des paramètres d'habilitation contenus dans le champ CM_H et sur des données contenues dans le champ CM_D.

De même, en fonction de ces paramètres, le module de calcul 32 effectue des opérations qui utilisent des paramètres mémorisés au niveau du poste récepteur.

Dans ce cas les paramètres de format du champ CM_F ou d'habilitation du champ CM_H font référence à des paramètres locaux grâce, par exemple, à un système d'adresses mémoire.

Par exemple, ces opérations utilisent des paramètres enregistrés dans la mémoire 33 non accessible en écriture par un utilisateur du poste récepteur.

Le module de calcul 32 peut également utiliser des paramètres enregistrés dans la mémoire 34 accessible en écriture par un utilisateur du poste récepteur.

Le module 32 de calcul peut ainsi déchiffrer les données contenues dans le champ CM_D avant de les re-chiffrer avec des paramètres spécifiques au poste récepteur.

Par exemple, à l'émission, le cryptogramme du mot de contrôle CCW est intégré dans le champ de données HM_D du message d'habilitation HM lequel est ensuite multiplexé avec les informations embrouillées I*. Ainsi, à la réception, des opérations de déchiffrement puis de re-chiffrement peuvent être appliquées au cryptogramme CCW du mot de contrôle.

A l'issue de l'étape 10, les moyens de calcul 32 délivrent des éléments constituant les paramètres de sécurité ainsi que les données du message d'ordre OM.

L'ensemble de ces paramètres et de ces données, est adressé au multiplexeur 35 qui met en oeuvre l'étape 20 de génération d'un message d'ordre et délivre le message d'ordre OM, lequel est re-multiplexé avec les informations embrouillées I*.

Ainsi, le message d'habilitation HM est remplacé par le message d'ordre OM généré localement en fonction de l'action CM définie par l'émetteur et transmise dans le message d'habilitation HM.

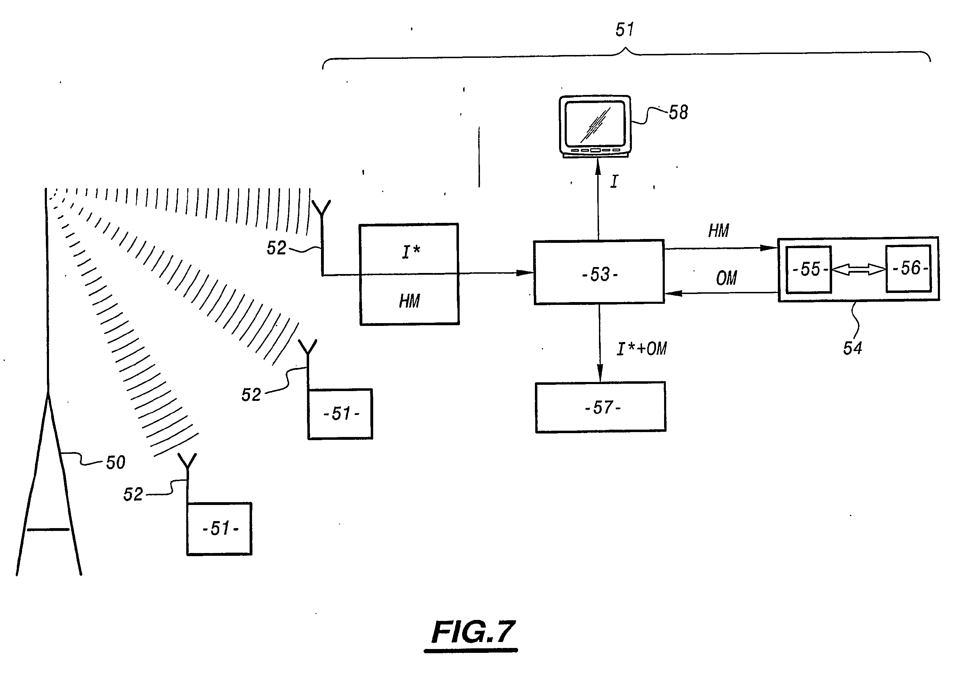

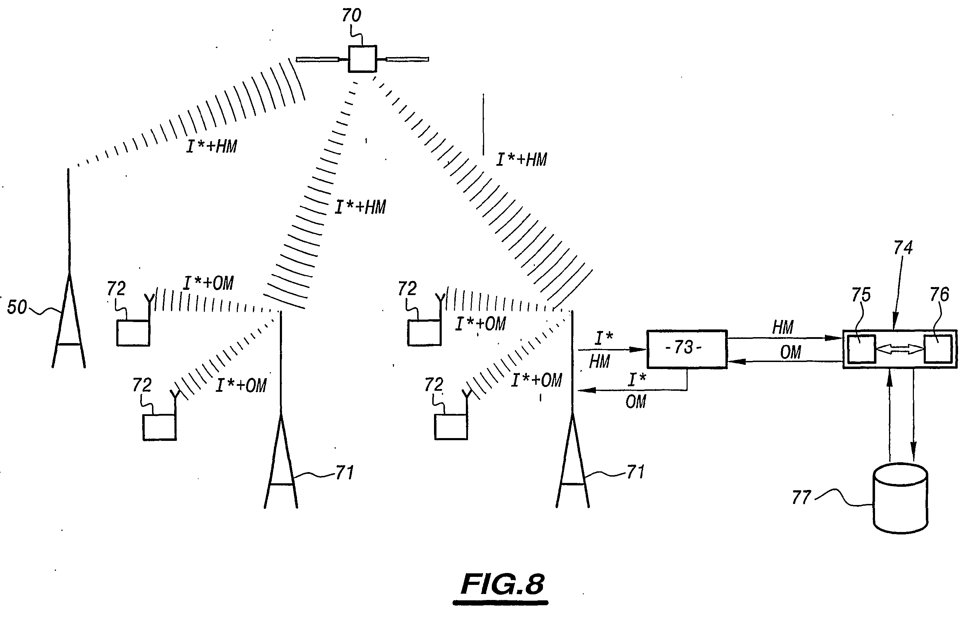

En référence aux figures 7 et 8, on va maintenant décrire deux modes de mise en oeuvre spécifiques du protocole de l'invention.

Sur la figure 7, on a représenté, de manière générale, un système de transmission d'informations embrouillées avec contrôle de l'enregistrement.

Un tel système comprend un émetteur diffuseur 50 et une pluralité de terminaux récepteurs 51.

Les terminaux 51 comportent au moins une antenne de réception 52 par le biais de laquelle ils reçoivent une information embrouillée I* multiplexée avec un message d'habilitation HM.

Chaque terminal 51 comporte en entrée un décodeur 53 lequel est associé à un processeur de sécurité. Ce dernier peut être intégré à une carte à puce amovible 54 comportant un microprocesseur 55 et une mémoire 56 non volatile et non accessible en écriture pour un utilisateur du terminal 51 dans laquelle est stockée au moins une copie de la clé d'exploitation SOK utilisée lors du chiffrement du mot de contrôle CW.

Préférentiellement, le mémoire 56 n'est pas non plus accessible en lecture.

L'émetteur 50 émet de manière classique par voie hertzienne, un programme de télévision embrouillé I* aux terminaux de réception 51.

A la réception, le décodeur 53 sépare le message d'habilitation HM des informations embrouillées I* et adresse le message d'habilitation HM pour son traitement, au microprocesseur 55 de la carte amovible 54.

Le microprocesseur 55 met alors en oeuvre l'étape 4 du procédé et effectue les vérifications classiques d'authenticité et d'adresse. Cette étape 4 de vérification se base sur la comparaison des paramètres envoyés avec des paramètres locaux fixes stockés dans la mémoire 56.

Avantageusement, avant d'être émis par l'émetteur diffuseur 50, tout ou partie du message d'habilitation HM est chiffré afin d'être rendu confidentiel. Dans ce cas, l'étape 4 de vérification d'authenticité est associée à une étape de restitution du message HM.

Par exemple, seuls les paramètres d'authenticité ne sont pas chiffrés, de sorte que l'étape de restitution est réalisée conditionnellement à la réalisation de l'étape 4.

Ainsi, un même message d'habilitation peut être destiné à un seul terminal ou à un groupe de terminaux en fonction des paramètres d'adresse.

Dans le cas où l'étape 4 de vérification est positive, le microprocesseur 55 entame l'étape 10 d'interprétation de l'action CM.

Par exemple, les paramètres de format du champ CM_F induisent un calcul à effectuer sur des données du champ CM_D, à l'aide des paramètres d'habilitation du champ CM_F et de paramètres locaux stockés dans la mémoire 56. Typiquement, ce calcul consiste à déchiffrer à l'aide de la clé SOK, le cryptogramme CCW du mot de contrôle puis à le rechiffrer avec une clé de chiffrement locale mémorisée dans la mémoire 56 du microprocesseur 55.

Le cas échéant, un surchiffrement du cryptogramme CCW peut être réalisé ou toute autre transformation de ce dernier.

Préférentiellement, les opérations de chiffrement et de déchiffrement sont réalisées exclusivement dans le microprocesseur 55, de sorte que le mot de contrôle CW n'est jamais accessible pour un utilisateur du poste récepteur.

Ainsi, le microprocesseur calcule des paramètres de sécurité et des données à associer au message d'ordre OM.

Par la suite le microprocesseur 55 réalise l'étape 20 de génération locale du message d'ordre OM en assemblant les éléments définis précédemment pour délivrer le message OM.

Le message OM délivré en sortie comporte alors à l'intérieur du champ OM_D de données, le nouveau cryptogramme du mot de contrôle chiffré avec une clé locale mémorisée dans le microprocesseur 55 exécutant l'opération.

Par la suite, le message OM est multiplexé à nouveau avec les informations embrouillées I* et est mémorisé sur un support 57 non volatil d'enregistrement d'informations tel qu'une cassette vidéo.

Ainsi, lors d'un nouvel accès aux informations embrouillées I* enregistrées, le message d'ordre est démultiplexé puis exécuté.

Cette exécution comporte la vérification des paramètres de sécurité du champ OM_H puis le décodage du champ de données OM_D. Dans ce dernier, se trouve le cryptogramme du mot de contrôle qui peut être déchiffré à l'aide du processeur 55 utilisé lors de la réception de l'information.

Lorsque la clé utilisée lors du rechiffrement est spécifique au microprocesseur 55 lui seul peut effectuer le déchiffrement du cryptogramme et en extraire le mot de contrôle afin d'accéder aux informations embrouillées I*.

De même, si la clé utilisée lors du rechiffrement est spécifique à un groupe de poste récepteurs, seul un terminal de ce groupe pourra avoir accès aux informations embrouillées.

Un tel rechiffrement à l'aide de clés locales permet à l'émetteur diffuseur 50 par exemple, de restreindre l'accès à des informations embrouillées ou d'affranchir les postes récepteurs de la clé d'exploitation SOK d'être le cas échéant modifiée.

Avantageusement, à chaque nouvel accès aux informations embrouillées enregistrées, le message OM est recalculé et un paramètre d'utilisation tel qu'un compteur ou une date limite d'utilisation est utilisé.

Par exemple, le champ de format CM_F de l'action CM de génération entraîne l'insertion dans le champ de données OM_D du message d'ordre OM, la date de création de celui-ci.

De même, le champ de données CM_D de l'action CM comporte des instructions de vérification de cette date. Lors de la génération du message OM, le champ de données CM_D est transféré et constitue une partie du champ de données OM_D du message d'ordre OM.

Ainsi, lors d'un nouvel accès aux informations embrouillées I* enregistrées avec le message d'ordre OM, celui-ci est exécuté. Après vérification des paramètres de sécurité du champ OM_H, les instructions du champ OM_D sont exécutées et la date de création est vérifiée, de sorte que des branchements conditionnels en fonction de cette date sont réalisables.

Par exemple, si les critères de validité de cette date sont vérifiés, les informations I* sont désembrouillées pour être affichées sur un afficheur 58.

Ainsi, grâce au protocole de l'invention, l'émetteur 50 du message HM maîtrise l'utilisation des informations reçues aux postes récepteurs en contrôlant les possibilités d'enregistrement et de relecture des informations embrouillées I* et multiplexées avec le message d'ordre OM généré localement en fonction des paramètres transmis dans l'action CM du message d'habilitation HM.

En référence à la figure 8, on a décrit un second mode de mise en oeuvre de l'invention dans le cas d'un système de retransmission, par voie satellitaire, terrestre, de fibre optique, coaxiale ou autre.

A titre d'exemple, ce système peut comprendre un émetteur diffuseur 50, un satellite 70, des stations de retransmission 71 et des postes récepteurs 72.

Chaque station de retransmission 71 peut comporter un décodeur 73 associé à un processeur de sécurité. Ce dernier peut être intégré à une carte amovible 74 qui comporte un microprocesseur 75 associé à une mémoire 76 non accessible en écriture pour un opérateur de la station de re-transmission 71 comprenant au moins une copie de la clé d'exploitation SOK utilisée lors du chiffrement du mot de contrôle CW.

Les stations 71 comportent également des bases de données 77 permettant de stocker des données spécifiques à chaque station 71 telles que des codes clients ou des clés de chiffrement spécifiques.

L'émetteur diffuseur 50 transmet une information embrouillée I* multiplexée avec un message d'habilitation HM au satellite 70 qui retransmet ces informations vers les stations de retransmission 71.

A la réception, le microprocesseur 75 met en oeuvre l'étape 4 du procédé et effectue les vérifications classiques d'authenticité et d'adresse du message HM. Cette étape 4 de vérification se base notamment sur la comparaison des paramètres envoyés avec des paramètres locaux stockés dans la mémoire 76.

Ainsi, un même message d'habilitation peut être destiné à un seul terminal ou à un groupe de terminaux en fonction des paramètres d'adresse.

Dans le cas où l'étape 4 de vérification s'est avérée satisfaisante, le microprocesseur 75 entame l'étape 10 d'interprétation de l'action CM.

Dans ce mode de réalisation, les paramètres de format de l'action CM contenus dans le champ CM_F permet l'usage de paramètres locaux de calcul obtenus à partir de la base de donnée 77.

A l'aide de ces paramètres locaux, des paramètres de format et d'habilitation de l'action CM, le processeur 75 génère les éléments constituant le message d'ordre OM.

Par exemple, les paramètres du champ CM_F font référence à des codes d'adresses de clients de cette station définis par un opérateur de la station 71.

Lors de l'étape 14, les paramètres de sécurité destinés au champ OM_H sont calculés par le microprocesseur 75 à l'aide de ces codes d'adresses.

Le microprocesseur 75 réalise ensuite l'étape 20 et délivre le message OM à l'attention du décodeur 73.

Ce message d'ordre OM est remultiplexé avec les informations embrouillées I* avant d'être retransmis vers les postes récepteurs 72.

Apres avoir séparé le message OM des informations I*, les poste récepteurs 72 mettent en oeuvre l'étape 25 et exécutent le message OM.

Les postes 72 effectuent alors une vérification des paramètres de sécurité du champ OM_H puis une lecture et un traitement des données du champ OM_D.

Dans l'exemple décrit, les paramètres de sécurité du champ OM_H contiennent les codes d'adresses et d'authenticité des clients de la station 71 ayant effectué l'étape 10. Ainsi seuls ces clients pourront satisfaire aux paramètres de sécurité du champ OM_H et accéder aux données du champ OM_D contenant notamment le cryptogramme CCW du mot de contrôle permettant le désembrouillage des informations I*.

Dans ce mode de réalisation, l'émetteur 50, en définissant l'action CM du message d'habilitation HM, commande la génération du message d'ordre OM en spécifiant les références des paramètres locaux à utiliser lors des calculs de l'étape 10.

Il apparaît donc que le protocole de l'invention permet de manière générale à un émetteur diffuseur de garder un contrôle optimal et variable sur l'utilisation d'une information embrouillée à l'aide de l'action CM de génération d'un message d'ordre transmis dans le message d'habilitation HM.

Par ailleurs, le message d'ordre généré peut également être un message d'habilitation, de sorte que son exécution entraîne la génération d'un nouveau message d'ordre.

Le protocole de l'invention a été décrit en référence à une diffusion d'un programme de télévision, afin d'en faciliter la compréhension. Cependant, ce protocole peut également s'appliquer à d'autres domaines, notamment la transmission d'informations numériques en réseau.

De même les terminaux de décodage peuvent être tout type de terminaux adaptés tels que des postes de télévision, des micro-ordinateurs, ....

La nature et les spécifications des composants des terminaux, et notamment l'agencement des décodeurs, des microprocesseurs et des mémoires peuvent être adaptés en fonction des besoins et de l'environnement.

Enfin, les opérations décrites dans les deux modes de réalisation présentés peuvent être combinées et/ou modifiées afin d'adapter le protocole de l'invention à l'utilisation souhaitée.

## Revendications

1. Procédé de commande à distance d'une action de génération locale d'un message d'ordre (OM), à partir d'un émetteur diffuseur (50), afin de commander une action locale sur au moins un poste récepteur (51 ; 71), comportant au moins un terminal de décodage (53 ;73), un module de contrôle (54 ;74) d'accès muni d'un processeur de sécurité (55 ;75), ledit processeur de sécurité comportant des paramètres de vérification d'authenticité et d'adresse mémorisés dans une mémoire (56 ;76) associée audit processeur (55 ;75), ledit procédé comportant :
- une étape (2) de transmission de l'émetteur diffuseur (50) vers le ou les postes récepteurs (51 ;71), d'un message d'habilitation (HM) comportant un champ (HM_H) contenant des paramètres d'authenticité et d'adresse et un champ (HM_D) contenant des données ; et
- une étape (4) de vérification dans le ou lesdits postes récepteurs (51 ;71) desdits paramètres d'authenticité et d'adresse par rapport aux paramètres mémorisés dans chacun desdits postes récepteurs (51 ;71),
**caractérisé en ce que** ledit message d'habilitation (HM) comporte, dans le champ (HM_D) de données, une action (CM) de génération, au niveau du ou des postes récepteurs (51 ;71), d'un message d'ordre (OM) calculé localement, et **en ce que** ledit procédé comporte au moins, conditionnellement à ladite étape de vérification (4) :
- une étape d'interprétation (10) de ladite action (CM) transmise dans ledit message d'habilitation (HM) ; et
- une étape (20) de génération locale d'un message d'ordre (OM) à partir des éléments générés au cours de ladite étape d'interprétation (10).

2. Procédé selon la revendication 1, **caractérisé en ce que** ledit champ (HM_D) de données du message d'habilitation (HM) comporte une pluralité de blocs d'instructions agencés en combinaisons logiques de conditions dont le résultat binaire de la vérification logique, vrai ou faux, permet d'engendrer un branchement conditionnel entre les blocs et le traitement des instructions contenues dans lesdits blocs.

3. Procédé selon l'une des revendications 1 ou 2, **caractérisé en ce que** ladite action (CM) comporte un champ (CM_F) contenant des paramètres représentatifs du format dudit message d'ordre (OM) à générer localement, ladite étape (10) d'interprétation de l'action (CM) comportant au moins une étape (12) de prise en compte desdits paramètres de format afin d'exécuter des opérations pour générer des éléments du message d'ordre (OM) conformément à ces paramètres de format.

4. Procédé selon la revendication 3, **caractérisé en ce que** lesdites opérations réalisées lors de ladite étape (10) d'interprétation incluent des opérations de chiffrement, de déchiffrement et/ou de surchiffrement, le surchiffrement étant un second chiffrement

5. Procédé selon l'une des revendications 3 ou 4, **caractérisé en ce que** lesdits paramètres de format contenus dans l'action (CM) comprennent des références à des paramètres locaux, mémorisés dans une mémoire (56 ;76) non accessible en écriture pour les utilisateurs desdits terminaux (51 ;71), lesdits paramètres locaux étant utilisés lors desdites opérations de ladite étape (10) d'interprétation de l'action (CM).

6. Procédé selon l'une quelconque des revendications 3 à 5, **caractérisé en ce que** lesdits paramètres de format contenus dans l'action (CM) comprennent des références à des paramètres locaux, mémorisés dans une mémoire (56 ;76) accessible en écriture pour les utilisateurs desdits terminaux (51 ;71), lesdits paramètres locaux étant utilisés lors desdites opérations de ladite étape (10) d'interprétation de l'action (CM).

7. Procédé selon l'une quelconque des revendications 3 à 6, **caractérisé en ce que** ladite action (CM) comporte un champ (CM_H) contenant des paramètres d'habilitation, ladite étape (10) d'interprétation de l'action (CM) comportant au moins une étape (14) de génération de paramètres de sécurité afin de définir des paramètres de sécurité pour le message d'ordre (OM), au moins à partir desdits paramètres d'habilitation et en fonction des opérations requises par la réalisation de l'étape (12) de prise en compte des paramètres de format.

8. Procédé selon l'une quelconque des revendications 3 à 7, **caractérisé en ce que** ladite action (CM) comporte un champ (CM_D) contenant des données, ladite étape (10) d'interprétation de l'action (CM) comportant au moins une étape (16) de traitement de données afin de définir des données du message d'ordre (OM), au moins à partir desdites données contenues dans le champ (CM_D) de données de l'action CM et en fonction des opérations requises par la réalisation de l'étape (12) de prise en compte des paramètres de format.

9. Procédé selon la revendication 8, **caractérisé en ce que** ledit champ (CM_D) de données de l'action (CM) comporte une pluralité de blocs d'instructions agencés en combinaisons logiques de conditions dont le résultat binaire de la vérification logique, vrai ou faux, permet d'engendrer un branchement conditionnel entre les blocs et le traitement des instructions qu'ils contiennent.

10. Procédé selon l'une quelconque des revendications 1 à 9, **caractérisé en ce que** ladite étape (20) de génération délivre un message d'ordre (OM) comportant un champ (OM_H) contenant des paramètres de sécurité et un champ (OM_D) contenant des données.

11. Procédé selon la revendication 10, **caractérisé en ce que** ledit champ (OM_D) de données du message d'ordre (OM) comporte une pluralité de blocs d'instructions agencés en combinaisons logiques de conditions dont le résultat binaire de la vérification logique, vrai ou faux, permet d'engendrer un branchement conditionnel entre les blocs et le traitement des instructions qu'ils contiennent.

12. Procédé selon l'une quelconque des revendications précédentes, **caractérisé en ce qu'**il comporte ultérieurement à ladite étape (20) de génération locale d'un message d'ordre, une étape (25) d'exécution de ce message d'ordre (OM).

13. Procédé selon la revendication 12, **caractérisé en ce que** ladite étape (25) d'exécution du message d'ordre (OM) comprend la vérification de paramètres de sécurité contenus dans le message d'ordre (OM) et la lecture puis le traitement de données contenues dans le message d'ordre (OM).

14. Procédé selon l'une quelconque des revendications précédentes, **caractérisé en ce que** ledit message d'ordre (OM) généré localement est un message d'habilitation (HM) tel que défini dans l'une quelconque des revendications précédentes.

15. Procédé selon l'une quelconque des revendications précédentes, **caractérisé en ce que** ledit émetteur diffuseur (50) étant adapté pour l'émission d'informations embrouillées (I*) au moyen d'une clé de service contenue dans un mot de contrôle (CW), la transmission desdites informations embrouillées étant accompagnée de la transmission d'un cryptogramme (CCW) du mot de contrôle, chiffré au moyen d'une clé d'exploitation (SOK), le terminal de décodage de chaque poste récepteur constituant alors un terminal de désembrouillage desdites informations embrouillées et comportant dans ledit processeur de sécurité (55 ; 75) dudit module de contrôle (54 ; 74), ladite clé d'exploitation (SOK) afin de restituer à partir de ladite clé d'exploitation et dudit mot de contrôle chiffré (CCW), ladite clé de service contenue dans ledit mot de contrôle (CW), chaque terminal de désembrouillage permettant à partir de ladite clé de service restituée, le désembrouillage desdites informations embrouillées (I*), ledit message d'habilitation (HM) est transmis par multiplexage dans le flux desdites informations embrouillées transmises de l'émetteur diffuseur (50) vers le ou les postes récepteurs (51 ; 71).

16. Procédé selon les revendications 10 et 15 prises ensembles, **caractérisé en ce que** ledit champ (CM_D) de données de ladite action (CM) comporte au moins ledit cryptogramme du mot de contrôle (CCW).

17. Procédé selon l'une quelconque des revendications 15 ou 16, **caractérisé en ce que** ledit champ de données (CM_D) de ladite action (CM) comprend des instructions de remplacement du message d'habilitation (HM) multiplexé avec lesdites informations embrouillées (I*) par ledit message d'ordre (OM) généré localement et **en ce que** ladite étape (20) de génération locale d'un message d'ordre est suivie d'une étape de remplacement dudit message d'habilitation (HM) par ledit message d'ordre (OM) dans lesdites informations embrouillées (I*).

18. Procédé selon la revendication 17, **caractérisé en ce qu'**il comporte une étape d'enregistrement sur un support non volatil (57) desdites informations embrouillées (I*) et multiplexées avec ledit message d'ordre (OM) généré localement.

19. Procédé selon la revendication 18, **caractérisé en ce que** lesdits paramètres de sécurité et/ou lesdites données dudit message d'ordre (OM) comportent des critères d'accès auxdites informations embrouillées (I*) enregistrées sur ledit support non volatil (57), ledit procédé comportant en outre :
- une étape de requête d'accès auxdites informations embrouillées et enregistrées ; et
- une étape de vérification desdits critères d'accès du message d'ordre (OM) afin de délivrer, sur vérification de ces critères d'accès, une autorisation d'accès auxdites données embrouillées enregistrées.

20. Procédé selon la revendication 19, **caractérisé en ce que** lesdits critères d'accès sont choisis parmi les paramètres dans le groupe constitué des paramètres suivants :
- un niveau d'habilitation du terminal;
- une date limite d'autorisation d'accès ;
- une durée définie par rapport à une date et/ou un instant ;
- une durée de vie ; et
- un nombre maximum de requêtes d'accès autorisées.

21. Procédé selon l'une quelconque des revendications 15 à 20, **caractérisé en ce qu'**il comporte une étape de retransmission desdites informations embrouillées multiplexées (I*) avec ledit message d'ordre (OM) généré localement, à partir du ou desdits postes récepteurs (71) vers un ou plusieurs postes récepteurs secondaires (72).

22. Procédé selon l'une quelconque des revendications précédentes, **caractérisé en ce que** tout ou partie dudit message d'habilitation (HM) est chiffré avant ladite étape (2) de transmission afin d'assurer la confidentialité de cette transmission, ladite étape (4) de vérification des paramètres d'authenticité et d'adresse étant associée à une étape de déchiffrement de ce message d'habilitation (HM).

23. Terminal de décodage et d'enregistrement d'informations embrouillées comportant un décodeur (53) auquel est associé un processeur de sécurité, **caractérisé en ce qu'**il est adapté pour la mise en oeuvre d'un procédé de commande à distance d'une action de génération locale d'un message d'ordre selon l'une quelconque des revendications 1 à 22 et **en ce qu'**il comporte en outre un support (57) non volatil d'enregistrement d'informations embrouillées (I*) et multiplexées avec le message d'ordre généré localement.

24. Terminal de décodage et de retransmission d'informations embrouillées comportant un décodeur associé à un processeur de sécurité, **caractérisé en ce qu'**il est adapté pour la mise en oeuvre d'un procédé de commande à distance d'une action de génération locale d'un message d'ordre selon l'une quelconque des revendications 1 à 22 et **en ce que** ledit terminal (71) comporte des moyens de retransmission d'informations embrouillées (I*) avec le message d'ordre (OM) généré localement.

## Claims

1. Method for remote control of an action to generate locally a command message (OM), from a broadcasting transmitter (50), in order to control a local action at at least one receiving station (51; 71), comprising at least a decoding terminal (53; 73), an access control module (54; 74) provided with a security processor (55; 75), the security processor comprising authenticity and address verification parameters which are stored in a memory (56; 76) which is associated with the processor (55; 75), the method comprising:
- a step (2) for transmitting, from the broadcasting transmitter (50) to the receiving station(s) (51; 71), an enabling message (HM) which comprises a field (HM_H) containing authenticity and address parameters and a field (HM_D) containing data; and
- a step (4) for versifying, in the receiving station(s) (51; 71), the authenticity and address parameters relative to the parameters stored in each of the receiving stations (51; 71),
**characterised in that** the enabling message (HM) comprises, in the data field (HM_D), an action (CM) for generating, at the receiving station(s) (51; 71), a commande message (OM) which is calculated locally, and **in that** the method comprises, in a manner conditional on the verification step (4), at least:
- a step (10) for interpreting the action (CM) transmitted in the enabling message (HM); and
- a step (20) for locally generating a command message (OM) from the elements generated during the interpreting step (10) .

2. Method according to claims 1, **characterised in that** the data field (HM_D) of the enabling message (HM) comprises a plurality of instruction blocks which are arranged in logical combinations of conditions the binary result of which for the logical verification, true or false, allows a conditional branching to be produced between the blocks and the processing of the instructions contained in said blocks.

3. Method according to either claim 1 or claim 2, **characterised in that** the action (CM) comprises a field (CM_F) which contains parameters representing the format of the command message (OM) to be generated locally, the step (10) for interpreting the action (OM) comprising at least a step (12) for taking into consideration the format parameters in order to carry out operations for generating elements of the command message (OM) in accordance with these format parameters .

4. Method according to claim 3, **characterised in that** the operations carried out during the interpreting step (10) include encrypting, unencrypting and/or over-encrypting operations.

5. Method according to either claim 3 or claim 4, **characterised in that** the format parameters contained in the action (CM) comprise references to local parameters which are stored in a memory (55; 76) which is non-write-accessible to the users of the terminals (51; 71), the local parameters being used during the operation of the step (10) for interpreting the action (CM).

6. Method according to any one of claims 3 to 5, **characterised in that** the format parameters contained in the action (CM) comprise references to local parameters which are stored in a memory (56; 76) which is write-accessible to the users of the terminals (51; 71), the local parameters being used during the operations of the step (10) for interpreting the action (CM).

7. Method according to any one of claims 3 to 6, **characterised in that** the action (CM) comprises a field (CM H) which contains enabling parameters, the step (10) for interpreting the action (CM) comprising at least a step (14) for generating security parameters in order to define security parameters for the command message (OM), at least on the basis of the enabling parameters and in accordance with the operations required in carrying out the step (12) for taking into consideration the format parameters.

8. Method according to any one of claims 3 to 7, **characterised in that** the action (CM) comprises a field (CM_D) which contains data, the step (10) for interpreting the action (CM) comprising at least a step (16) for processing data in order to define data of the command message (OM), at least on the basis of the data contained in the data field (CM_D) of the action (CM) and in accordance with the operations required in carrying out the step (12) for taking into consideration the format parameters.

9. Method according to claim 8, **characterised in that** the data field (CM_D) of the action (CM) comprises a plurality of instruction blocks which are arranged in logical combinations of conditions, the binary result of which for the logical verification, true or false, allows a conditional branching to be produced between the blocks and the processing of the instructions they contain.

10. Method according to any one of claims 1 to 9, **characterised in that** the generating step (20) delivers a command message (OM) which comprises a field (OM_H) containing security parameters and a field (OM_D) containing data.

11. Method according to claim 10, **characterised in that** the data field (OM_D) of the command message (OM) comprises a plurality of instruction blocks which are arranged in logical combinations of conditions, the binary result of which for the logical, verification, true or false, allows a conditional branching to be produced between the blocks and the processing of the instructions they contain.

12. Method according to any one of the preceding claims, **characterised in that** it comprises, further to the step (20) for locally generating a command message, a step (25) for carrying out this command message (OM).

13. Method according to claim 12 **characterised in that** the step (25) for carrying out the command message (OM) comprises the verification of security parameters contained in the command message (OM) and reading then processing data contained in the command message (OM) .

14. Method according to any one of the preceding claims, **characterised in that** the locally generated command message (OM) is an enabling message (HM), as defined in any one of the preceding claims.

15. Method according to any one of the preceding claims, **characterised in that** the broadcasting transmitter (50) being suitable for transmitting scrambled information (I*) by means of a service key which is contained in a control word (CW), the transmission of the scrambled information being accompanied by the transmission of a cryptogram (CCW) of the control word, which is encrypted by means of an operation key (SOK), the decoding terminal of each receiving station then constituting a terminal for unscrambling the scrambled information and comprising, in the security processor (55; 75) of the control module (54; 74), the operation key (SOK) in order to reconstitute, from the operation key and the encrypted control word (CCW), the service key contained in the control word (CW), each unscrambling terminal allowing, on the basis of the reconstituted service key, the scrambled information (I*) to be unscrambled, the enabling message (HM) is transmitted by multiplexing in the flow of scrambled information transmitted from the broadcasting transmitter (50) to the receiving station(s) (51; 71).

16. Method according to claims 10 and 15 taken together, **characterised in that** the data field (CM D) of the action (CM) comprises at least the cryptogram of the control word (CCW).

17. Method according to either claim 15 or 16, **characterised in that** the data field (CM_D) of the action (CM) comprises instructions for replacing the enabling message (HM), which is multiplexed with the scrambled information (I*), with the locally generated command message (OM) , and **in that** the step (20) for locally generating a command message is followed by a step for replacing the enabling message (HM) with the command message (OM) in the scrambled information (I*).

18. Method according to claim 17, **characterised in that** it comprises a step for recording, on a non-volatile carrier (57), the scrambled information (I*) which is multiplexed with the locally generated command message (OM).

19. Method according to claim 18, **characterised in that** the security parameters and/or the data of the command message (OM) comprise(s) criteria for access to the scrambled information (I*) which is recorded on the non-volatile carrier (57), the method further comprising:
- a step for requesting access to the scrambled and recorded information; and
- a step for verifying the access criteria of the command message (OM) in order to deliver, upon verification of these access criteria, an authorisation for access to the recorded scrambled data.

20. Method according to claim 19, **characterised in that** the access criteria are selected from the parameters in the group constituted by the following parameters:
- an enabling level of the terminal;
- a limit date for access authorisation;
- a defined duration relative to a date and/or time;
- a service life; and
- a maximum number of authorised access requests.

21. Method according to any one of claims 15 to 20, **characterised in that** it comprises a step for retransmitting the scrambled information (I*), which is multiplexed with the locally generated command message (OM), from the receiving station(s) (71) to one or more secondary receiving station(s) (72).

22. Method according to any one of the preceding claims, **characterised in that** all or part of the enabling message (HM) is encrypted before the transmission step (2) in order to ensure the confidentiality of this transmission, the step (4) for verifying the authenticity and address parameters being associated with a step for unencrypting this enabling message (HM).

23. Terminal for decoding and recording scrambled information comprising a decoder (53), with which a security processor is associated, **characterised in that** it is adapted to implement a method for remote control of an action to generate locally a command message according to any one of claims 1 to 22, and **in that** it further comprises a non-volatile carrier (57) for recording scrambled information (I*), which is multiplexed with a locally generated command message.

24. Terminal for decoding and retransmitting scrambled information comprising a decoder which is associated with a security processor, **characterised in that** it is adapted to implement a method for remote control of an action to generate locally a command message according to any one of claims 1 to 22 and **in that** the terminal (71) comprises means for retransmitting scrambled information (I*) with a locally generated command message (OM).

## Patentansprüche

1. Fernsteuerverfahren für eine lokale Aktion zur Erzeugung einer Befehlsmitteilung (OM), von einer Rundfunkanlage (50) aus um wenigstens einem Empfangsgerät (51 ; 71), umfassend wenigstens ein Decodiertermiral (53 ; 73) und einen mit einem Sicherheitsprozessor (55 ; 75) ausgerüsteten Zugangskontrollmodul (54 ; 74), eine lokale Aktion zu befehlen, wobei der genannte Sicherheitsprozessor Authentizitäts- und Adressenverifikationsparameter umfasst, abgespeichert in einem dem Prozessor (55 ; 75) zugeordneten Speicher (56 ; 76), und das Verfahren dabei umfasst:
- einen Schritt (2) zur Übertragung - von der Rundfunkeinrichtung (50) zu dem (oder den) Empfangsgerät(en) (51 ; 71) - einer Habilitationsmitteilung (HM) mit einem Authentizitäts- und Adressenverifikationsparameter enthaltenden Feld (HM_H) und einem Daten enthaltenden Feld (HM_D); und
- einen Schritt (4) zur Verifizierung - in dem (oder den) genannten Empfangsgerät(en) (51 ; 71) - der genannten Authentizitäts- und Adressenverifikationsparameter in Bezug auf die in jedem der genannten Empfangsgeräte (51 ; 71) abgespeicherten Parameter, **dadurch gekennzeichnet, dass** die genannte Habilitationsmitteilung (HM) in dem Datenfeld (HM_D) eine Aktion (CM) zur Erzeugung einer lokal berechneten Befehlsmitteilung (OM) in dem (oder den) Empfangsgerät(en) (51 ; 71) umfasst, und dadurch, dass das genannte Verfahren unter bestimmten Bedingungen in dem Verifizierungsschritt (4) wenigstens umfasst:
- einen Schritt (10) zur Interpretation der genannten Aktion (CM), übertragen in der genannten Habilitationsmitteilung (HM); und
- einen Schritt (20) zur lokalen Erzeugung einer Befehlsmitteilung aus den während des genannten Interpretationsschritts (10) erzeugten Elementen.

2. Verfahren nach Anspruch 1, **dadurch gekennzeichnet, dass** das genannte Feld (HM_D) mit den Daten der Habilitationsmitteilung (HM) eine Vielzahl von Befehlsblöcken umfasst, angeordnet zu logischen Bedingungskombinationen, deren binares Resultat der logischen Verifikation, richtig oder falsch, ermöglicht, eine bedingte Verzweigung zwischen den Blöcken und der Verarbeitung der in den genannten Blöcken erhaltenden Befehle zu erzeugen.

3. Verfahren nach Anspruch 1 oder 2 **dadurch gekennzeichnet, dass** die genannte Aktion (CM) ein Feld (CM_F) mit Parametern umfasst, die repräsentativ sind für das Format der zu erzeugenden lokalen Befehlsmitteilung (OM), wobei der genannte Schritt (10) zu Interpretation der Aktion (CM) wenigstens einen Schritt (12) umfasst, der die genannten Formatparameter berücksichtigt, um Operationen zur Erzeugung der Elemente der Befehlsmitteilung (OM) gemäß diesen Formatparametern auszuführen.

4. Verfahren nach Anspruch 3, **dadurch gekennzeichnet, dass** die genannten Operationen, realisiert während des interpretationsschritts (10), Verschlüsselungs- und/oder Entschlüsselungs- und/oder Überverschlüsselungsoperationen einschließen, wobei die Überverschlüsselung eine zweite Verschlüsselung ist.

5. Verfahren nach einem der Ansprüche 3 oder 4, **dadurch gekennzeichnet dass** die genannten in der Aktion (CM) enthaltenen Formatparameter Querverweise auf lokale Parameter umfassen, abgespeichert in einem Speicher (56 ; 76), auf den die Benutzer der genannten Endgeräte (51 ; 71) keinen Schreibzugriff haben, wobei die genannten lokalen Parameter während der genannten Operationen des genannten Interpretationsschritts (10) der Aktion (CM) benutzt werden

6. Verfahren nach einem der Ansprüche 3 bis 5, **dadurch gekennzeichnet, dass** die genannten in der Aktion (CM) enthaltenen Formatparameter Querverweise auf lokale Parameter umfassen, abgespeichert in einem Speicher (56 ; 76), auf den die Benutzern der genannten Endgeräte (51 ; 71) Schreibzugriff haben, wobei die genannten lokalen Parameter während der genannten Operationen des genannten interpretationsschritts (10) der Aktion (CM) benutzt werden.

7. Verfahren nach einem der Ansprüche 3 bis 6, **dadurch gekennzeichnet, dass** die genannte Aktion (CM) ein Habilitationsparameter enthaltendes Feld (CM_H) umfasst, wobei der genannte Interpretationsschritt (10) der Aktion (CM) wenigstens einen Schritt (14) zur Erzeugung von Sicherheitsparametern umfasst, um Sicherheitsparameter für die Befehlsmitteilung (OM) zu definieren, zumindest aus den genannten Habilitationsparametern und in Abhängigkeit von den durch die Realisierung des Formatparameter-Berücksichtigungsschritts (12) erforderlichen Parametern.

8. Verfahren nach einem der Ansprüche 3 bis 7, **dadurch gekennzeichnet, dass** die genannte Aktion (CM) ein Daten enthaltendes Feld (CM_D) umfasst, wobei der genannte Interpretationsschritt (10) der Aktion (CM) wenigstens einen Datenverarbeitungsschritt (16) umfasst, um Daten der Befehlsmitteilung (OM) zu definieren, zumindest aus den genannten in dem Feld (CM_D) mit Daten der Aktion CM und in Abhängigkeit von den durch die Realisierung des Formatparameter-Berücksichtigungsschritts (12) erforderlichen Parametern.

9. Verfahren nach Anspruch 8, **dadurch gekennzeichnet, dass** das genannte Feld (CM_D) mit Daten der Aktion (CM) eine Vielzahl von Befehlsblöcken umfasst, angeordnet zu logischen Bedingungskombinationen, deren binäres Resultat der logischen Verifikation, richtig oder falsch, ermöglicht, eine bedingte Verzweigung zwischen den Blöcken und der Verarbeitung der Befehle, die sie enthalten, zu erzeugen.

10. Verfahren nach einem der Ansprüche 1 bis 9, **dadurch gekennzeichnet dass** der genannte Erzeugungsschritt (20) eine Befehlsmitteilung (OM) liefert, die ein Sicherheitsparameter enthaltendes Feld (OM_H) und ein Daten enthaltendes Feld (OM_D) umfasst.

11. Verfahren nach Anspruch 10, **dadurch gekennzeichnet, dass** das genannte Feld (OM_D) mit Daten der Befehlsmitteilung (OM) eine Vielzahl von Befehlsblöcken umfasst, angeordnet zu logischen Bedingungskombinationen, deren binäres Resultat der logischen Verifikation, richtig oder falsch, ermöglicht, eine bedingte Verzweigung zwischen den Blöcken und der Verarbeitung der Befehle, die sie enthalten, zu erzeugen.

12. Verfahren nach einem der vorhergehenden Ansprüche, **dadurch gekennzeichnet, dass** es nach dem genannten Schritt (20) der lokalen Erzeugung einer Befehlsmitteilung einen Schritt (25) zur Ausführung dieser Befehlsmitteilung (OM) umfasst.

13. Verfahren nach Anspruch 12, **dadurch gekennzeichnet, dass** der genannte Ausführungsschritt (25) der Befehlsmitteilung (OM) die Verifizierung von in der Befehlsmitteilung (OM) enthaltenen Sicherheitsparametern und die Lektüre, dann die Verarbeitung von in der Befehlmitteilung (OM) enthaltener Daten umfasst.

14. Verfahren nach einem der vorhergehenden Ansprüche, **dadurch gekennzeichnet, dass** die genannte lokal erzeugte Befehlsmitteilung (OM) eine Habilitationsmitteilung (HM) wie definiert in einem der vorhergehenden Ansprüche ist.

15. Verfahren nach einem der vorhergehenden Ansprüche, **dadurch gekennzeichnet, dass** die genannte Rundfunkanlage (50) fähig ist, mittels eines in einem Kontrollwort (CW) enthaltenen Dienstschlüssels verschlüsselte Informationen (I*) zu senden, wobei die Übertragung der genannten verschlüsselten Informationen begleitet wird von der Übertragung eines Kryptogramms (CCW) des Kontrollworts (CW), verschlüsselt mittels eines Betriebsschlüssels (SOK), wobei das Decodierterminal jedes Empfangsgeräts dann ein Entschlüsselungs- bzw. Entwürfelungsterminal der verwürfelten Informationen bildet und in dem genannten Sicherheitsprozessor (55 , 75) des genannten Kontrollmoduls (54 ; 74) den genannten Betriebsschlüssel (SOK) umfasst, um aus dem genannten Betriebsschlüssel und dem genannten verschlüsselten Kontrollwort (CCW) den genannten Dienstschlüssel, enthalten in dem Kontrollwort (CW), herauszugeben, wobei jedes Entwürfelungsterminal aufgrund des genannten herausgegebenen Dienstsschlüssels die Entwürfelung der verwürfelten Informationen (I*) ermöglicht, und die genannte Habilitationsmitteilung (HM) durch Multiplexing in dem Fluss der genannten übertragenen verwürfelten informationen von der Rundfunkanlage (50) zu den Empfangsgeräten (51 ; 71) übertragen wird.

16. Verfahren nach Anspruch 10 und 15 zusammen genommen, **dadurch gekennzeichnet, dass** das genannte Datenfeld (CM_D) der genannten Aktion (CM) wenigstens das genannte Kryptogramm des Kontrollworts (CCW) umfasst.

17. Verfahren nach einem der Ansprüche 15 oder 16, **dadurch gekennzeichnet, dass** das genannte Datenfeld (CM_D) der genannten Aktion (CM) Befehle zum Ersetzen der Habilitationsmitteilung (HM) umfasst, gemultiplext mit den genannten verwürfeiten Informationen (I*) durch die genannte lokal erzeugte Befehlsmitteilung (OM), und dadurch, dass der genannte Schritt (20) zur lokalen Erzeugung einer Befehlsmitteilung gefolgt wird von einem Schritt zum Ersetzen der genannten Habilitationsmitteilung (HM) durch die genannte Befehlsmitteilung (OM) in den genannten verwürfelten Informationen (I*).

18. Verfahren nach Anspruch 17, **dadurch gekennzeichnet dass** es einen Schritt zur Aufzeichnung der genannten verwürfelten und mit der genannten lokal erzeugten Befehlsmitteilung (OM) gemultiplexten Informationen (I*) auf einem nichtflüchtigen Speicher (57) umfasst

19. Verfahren nach Anspruch 18, **dadurch gekennzeichnet, dass** die genannten Sicherheitsparameter und/oder die genannten Daten der genannten Befehlsmitteilung (OM) Kriterien eines Zugriffs auf die verwürfelten Informationen (I*) umfassen, aufgezeichnet auf dem nichtflüchtigen Speicher (57), wobei das Verfahren außerdem umfasst:
- einen Schritt zur Abfrage eines Zugriffs auf die verwürfelten und aufgezeichneten informationen; und
- einen Schritt zur Verifizierung der genannten Kriterien eines Zugriffs auf die Befehlsmitteilung (OM), um bei Verifizierung dieser Zugriffskriterien eine Zugriffsautorisierung auf die aufgezeichneten verschlüsselten Daten zu erteilen.

20. Verfahren nach Arspruch 19, **dadurch gekennzeichnet, dass** die genannten Zugriffskriterien ausgewählt werden unter den Parametern in der durch die folgenden Parameter gebildeten Gruppe:
- eines Habilitationsniveaus des Terminals;
- eines Ablauftermins der Zugriffsautorisierung;
- einer definierten Dauer in Bezug auf ein Datum und/oder einem Zeitpunkt;
- einer maximalen Anzahl autorisierter Zugriffsabfragen.

21. Verfahren nach einem der Ansprüche 15 bis 20, **dadurch gekennzeichnet, dass** es einen Schritt zur Übertragung bzw. Weiterleitung der genannten gemultiplexten verwürfelten Informationen (I*) mit der genannten lokal erzeugten Befehlsmitteilung von dem (oder den) Empfangsgerät(en) (71) zu einem (oder mehreren) Sekundär-Empfangsgerät(en) (72) umfasst.

22. Verfahren nach einem der vorhergehenden Ansprüche, **dadurch gekennzeichnet, dass** die genannte Habilitationsmitteilung (HM), ganz oder teilweise, vor dem genannten Übertragungsschritt (2) verwürfelt wird, um die Vertraulichkeit dieser Übertragung sicherzustellen, wobei der genannte Verifizierungsschritt (4) der Authentizitäts- und Adressenparameter verknüpft ist mit einem Entschlüsselungsschritt dieser Habilitationsmitteilung (HM).

23. Terminal zur Decodierung und Aufzeichnung verschlüsselter Informationen, einen Decodierer (53), dem ein Sicherheitsprozessor zugeordnet ist, umfassend, **dadurch gekennzeichnet, dass** es ein Verfahren für eine lokale Aktion zur Erzeugung einer Befehlsmitteilung nach einem der Ansprüche 1 bis 22 anwenden kann, und dadurch, dass es außerdem einen nichtflüchtigen Träger (57) zur Aufzeichnung von verwürfelten und mit der lokal erzeugten Befehlsmitteilung gemultiplexten informationen (I*) umfasst.

24. Terminal zur Decodierung und Übertragung bzw Weiterleitung verwürfelter Informationen, einen mit einem Sicherheitsprozessor verbundenen Decodierer umfassend, **dadurch gekennzeichnet, dass** es fähig ist ein Fernsteuerverfahren für eine lokale Aktion zur Erzeugung einer Befehlsmitteilung nach einem der Ansprüche 1 bis 22 anzuwenden, und dadurch, dass das genannte Terminal (71) Einrichtungen zur Übertragung bzw. Weiterleitung von verwürfelten Informationen (I*) mit der lokal erzeugten Befehlsmitteilung (OM) umfasst.
